# EUROPEAN PATENT APPLICATION

(11) **EP 0 620 521 A2**
(43) Date of publication of application: **19.10.1994**
(21) Application number: 94302244.2
(22) Date of filing: 29.03.1994
(51) Int. Cl.: G06F 9/44

(54) **Method for dynamically building dialog boxes**

(30) Priority: 16.04.1993 US 48438
(71) Applicant: Hewlett-Packard Company, Palo Alto, California 94304 (US)
(72) Inventor: Dehart, Daniel L., Loveland, CO 80538 (US); Krause, Michael D., Loveland, CO 80538 (US)
(74) Representative: Colgan, Stephen James

(57) **Abstract**

A method for dynamically building dialog boxes (240) within a graphical user interface application (225). A description language (230) is provided to build a description file which contains dialog box templates. This method accommodates content changes of the dialog boxes by using the templates for each dialog box; this template will grow or shrink according to its content requirements. The present method performs two functions: (1) provides initial positioning of dialog elements (420) and (2) sets special positioning requirements (450). The present method proceeds sequentially through the description file so that elements that are described first within the file will be positioned first within the dialog box. In a preferred embodiment, the starting point of each dialog box is the upper left-hand corner. In this manner, prior defined elements will appear above or to the left of subsequent defined elements.

## Description

### Field of the Invention

The present invention relates generally to graphical user interfaces and more particularly to a method of dynamically building dialog boxes for a graphical user interface.

### Background of the Invention

Graphical user interfaces (GUIs) are provided to facilitate end-user interaction with a computer applications program. One part of a GUI is the dialog box-- an area of the screen which controls program queries and end-user responses. Typical dialog boxes are defined during program development by a computer applications developer. These dialog boxes, however, cannot be easily changed once they are defined; in other words, typical dialog boxes cannot be changed dynamically. Thus, any changes that would be required must be done manually. This is a very time-consuming effort, especially in applications that contain hundreds of dialog boxes.

For example, a dialog box and its associated controls have fixed dimensions which are defined in a resource file using a common application program interface (API). If text strings associated with the dialog box were to change, the dimensions of this new string (i.e., height and extent) might be different than the original string. Thus, to accommodate the new string, the dimensions of the dialog box and its associated controls would need to be manually changed.

### SUMMARY OF THE INVENTION

The present invention provides a method for dynamically building dialog boxes within a GUI application. This method accommodates content changes of the dialog boxes by providing a dynamic template for each dialog box; this template will grow or shrink according to its content requirements. One advantage of this method is in the area of language translations. When a software product is translated to a different language, the text size will often change both in height and extent. Using the dynamic dialog box method, language translations are facilitated since there is no need to change the overall features of every dialog box; only the text needs changing.

Generally, an applications developer specifies the relative placements and dimensions of every element within a dialog box using a description language which is provided to facilitate this method. A description file is created which contains templates for the developer-defined dialogs. Included in the dialog templates are special positioning requirements.

Once the description of the dialog boxes is written, the present method performs two functions: (1) provides initial positioning of dialog elements and (2) sets special positioning requirements. The present method proceeds sequentially through the description file so that elements that are described first within the file will be positioned first within the dialog box. In a preferred embodiment, the starting point of each dialog box is the upper left-hand corner. In this manner, prior defined elements will appear above or to the left of subsequent defined elements. It should be understood that any other starting point can be specified by the developer without departing from the scope of the present invention.

Another advantage of this method is that the overall features of the dialog box remains consistent, regardless of the textual content. Once the developer creates the description file, the dialog box features such as frame layout, title bar, and scroll bars are set. The only items that then need to be modified are the dialog box contents, such as text strings.

The present method includes a plurality of control elements such as Pushbutton, Radiobutton, Icon and Tachometer controls. Positioning styles in the present method range from grouping types, such as row and column grouping, to stretch types such as stretching a control's bottom edge to the bottom edge of its parent frame. Other control elements and positioning styles are listed in Appendix A - Description Language Positioning Identifiers.

### BRIEF DESCRIPTION OF THE DRAWINGS

FIG. 1 shows a block diagram of a computer system incorporating the present invention.

FIG. 2 shows an overview of the system for dynamically building dialog boxes according to the present invention.

FIG. 3 shows a block diagram of the description language according to the present invention.

FIG. 4 shows a flow diagram of the method for dynamically building dialog boxes.

FIG. 5 shows a more detailed flow diagram of the first pass of the method for dynamically building dialog boxes.

FIG. 6 is a continuation of FIG. 5 of the detailed flow diagram of the first pass.

FIG. 7 is a continuation of FIG. 6 of the detailed flow diagram of the first pass.

FIG. 8 shows a more detailed flow diagram of the second pass of the method for dynamically building dialog boxes.

### DETAILED DESCRIPTION OF THE PREFERRED EMBODIMENT

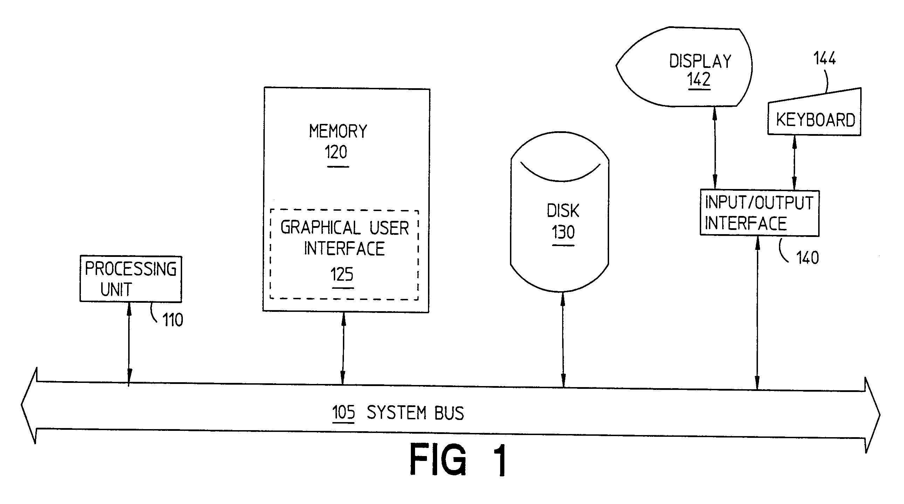

FIG. 1 shows a block diagram of a computer system incorporating the present invention. A processing unit 110 is the heart of the computer system, controlling the other components through a system bus 105. Memory 120 is provided for storing programming tasks and data. One task which is included in memory 120 is a graphical user interface 125 which will be discussed more fully below. A disk 130 is used by the system for storing data associated with the graphical user interface 125. And input/output interface controls communications between the system bus 105 and a display 142 and keyboard 144. The display 142 is provided to output text and graphical information to a user. The keyboard 144 allows the user to input data to the computer system.

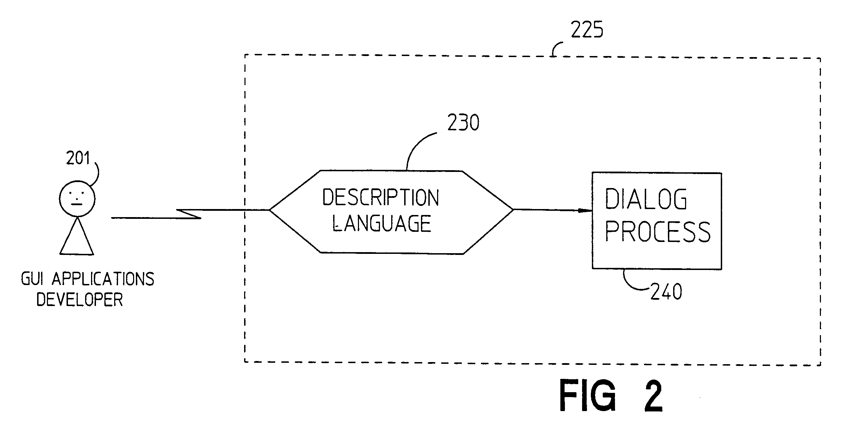

FIG. 2 shows an overview of the system for dynamically building dialog boxes. A graphical user interface (GUI) applications developer 210 interacts with a GUI 225 via keyboard and/or mouse inputs (not shown). In a preferred embodiment, the GUI 225 is Microsoft Windows available from Microsoft Corporation, One Microsoft Way, Redmond, Washington 98052. Other general purpose user interfaces may be used, with slight modifications to the system, without departing from the spirit and scope of the present invention.

The developer 210 uses a description language 230 to describe the relative placements and associated dimensions of elements within a dialog box. The description language 230 provides the necessary semantics and syntax to create a description file (not shown) which holds a plurality of dialog box templates. The description file needs only to be created once. A dialog process 240 then takes the information within the description file to dynamically build the dialog boxes according to the dialog templates.

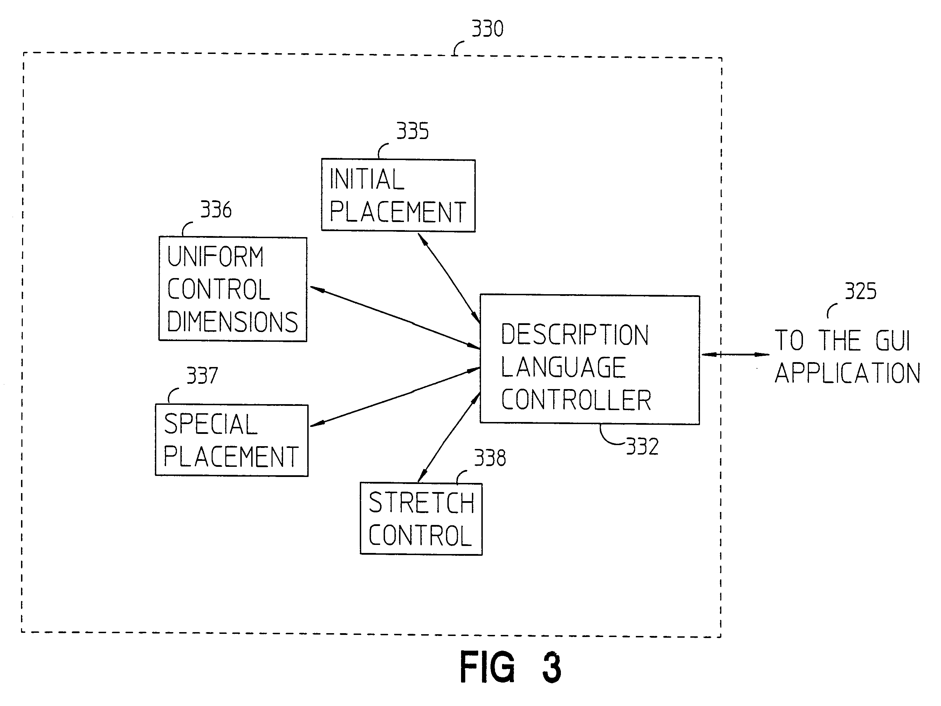

FIG. 3 shows a block diagram of the description language according to the present invention. The description language 330 can be viewed as a controller 332 and at least four sub-processes. A first sub-process, the initial placement process 335, permits the developer to define the relative placements and dimensions of the elements within the dialog box. Initial placement process 335 includes such things as frame dimensions, the number and type of elements which are to be placed in the dialog box, and how the text within the dialog box is to be displayed.

A second sub-process, the uniform control dimensions process 336, provides grouping capabilities so that, for example, all the controls within a row should have a certain height and width. A special placement process 337 is provided so that a control may be positioned with respect to its parent frame. A fourth sub-process, the stretch control process 338, further provides customization of an element's position.

Specific control elements and positioning styles are listed in Appendix A - Description Language Positioning Identifiers. It should be understood that other control elements and positioning styles could be incorporated into the present method without departing from the scope of the present invention.

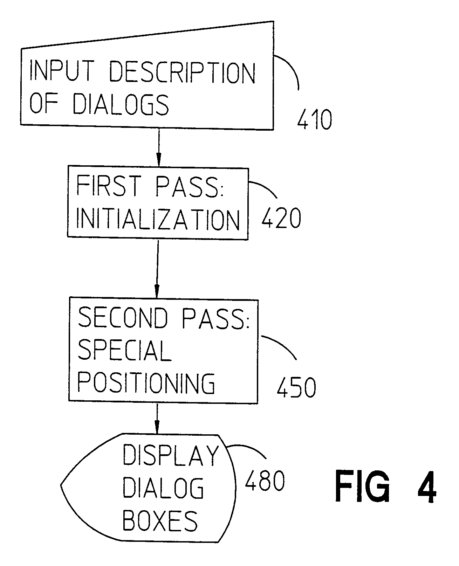

FIG. 4 shows a flow diagram of the present method for dynamically building dialog boxes. After the developer creates a description file 410 using the description language discussed with respect to FIG. 3, block 420 performs a first pass to initialize each element's relative position and dimension within the dialog box. Control is then passed to block 450 so that a second pass is performed to apply any special positioning rules to the elements. Finally, the dialog box is displayed 480 within the GUI.

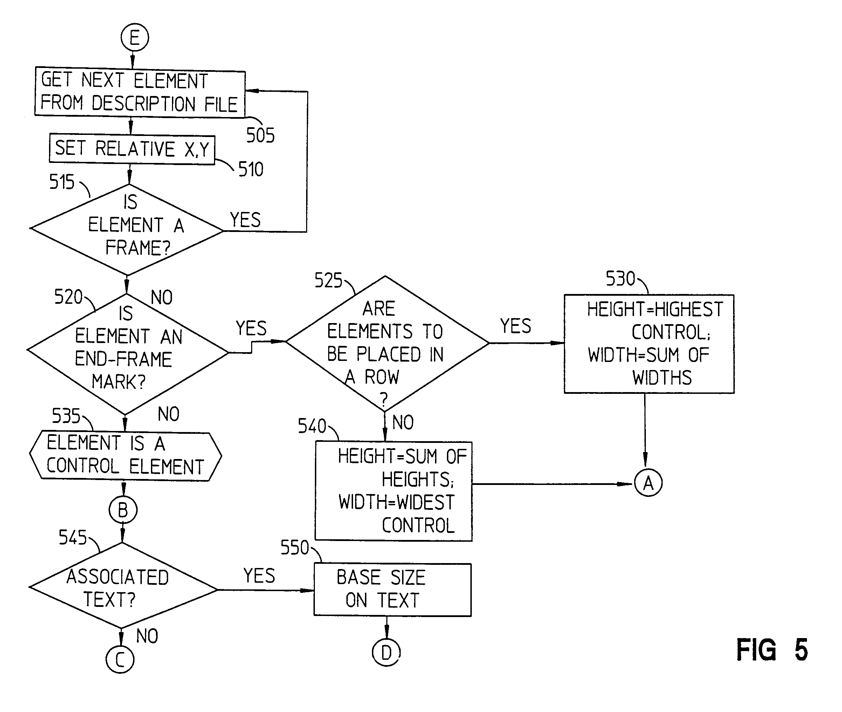

Figures 5, 6 and 7 show a more detailed flow diagram of the method of the first pass. FIG. 5 starts by retrieving the next available element from a description file as illustrated by block 505. The description file holds the plurality of dialog templates that are created by the description language. If the first pass has just begun, the next available element will be the first-defined element residing in the description file. Block 510 will then set the relative x-axis and y-axis offsets from an origin. In a preferred embodiment, the origin is the upper left-hand corner of the dialog box.

A decisional step is then taken to determine the nature of the element retrieved by block 505. Block 515 determines whether the element is a frame. If the element is a frame, control is then returned to block 505 to retrieve the next element from the description file. If the element is not a frame, control is passed to block 520 to determine if the element is an end-frame mark. If the element is not an end-frame mark, block 535 assigns the element as a control element.

If the element is an end-frame mark, block 525 then determines whether the elements already retrieved from the description file are to be placed within a single row. If the elements are being placed in a row, block 530 sets the height of the parent frame equal to the highest control element retrieved from the description file. Block 530 also sets the width of the parent frame equal to the sum of the widths of every element within that parent frame. If block 525 determines that the elements are not to be placed in a row, the method assumes that the elements will be placed into the same column. Therefore, block 540 will set the height of the parent frame equal to the sum of the heights of every element within the frame; the width of the parent frame will be set equal to the width of the widest control element.

The sizing of each individual element starts with block 545 which determines whether there is any associated text with a particular control element. If there is associated text, bock 550 will base the size of the control element on the size of the text so that the control element encompasses the textual content. An advantage of the present invention is that each control element can be sized based on its textual content. This feature facilitates language translations (e.g., from English to Japanese) which will typically change the height and extent of the text.

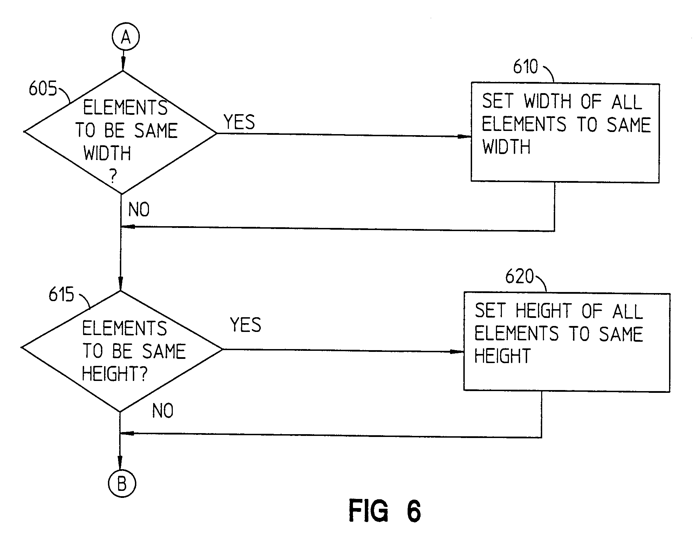

FIG. 6 starts with decisional block 605. Both blocks 530, 540 of FIG. 5 pass control to block 605 which determines whether the elements within the parent frame are to be sized to have the same width. If the same width is to be used, block 610 will set the width of all elements to equal the same width. If different widths are to be allowed, control is passed to block 615 which determines whether the same height is to be applied to all the elements. Block 620 will set the height of all elements to the same height if block 615 determines that to be. Otherwise, control is sent back to block 545 of FIG. 5 so that the sizing of the individual control elements can be determined.

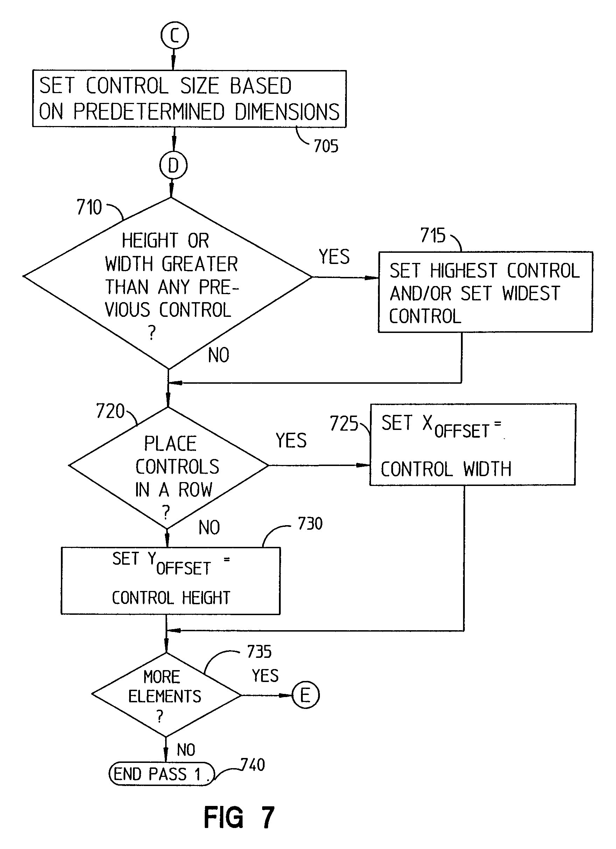

FIG. 7 starts with block 705 which follows decisional block 545. Block 705 sets the size of the control element on predetermined dimensions which have been specified in the description file. Block 710 determines whether the height or width of the control element is greater than any other previous control element. If either the height or width or both are larger than previous elements, that value is stored as the highest and/or widest control for later use by blocks 530 and 540 of FIG. 5.

After block 710 determines whether the element is higher and/or wider, control is passed to block 720 which determines whether the control elements are to be placed in a row. If the elements are to be in a row, block 725 will increment the x-axis offset by the width of the present control. Otherwise, block 730 default to placing the elements in a column and will increment the y-axis offset by the height of the control. Once the row or column placement of the element is set, block 735 determines whether there is any other elements in the description file. If there is another element, control is returned to the beginning of pass 1 (i.e., block 505 of FIG. 5). Pass 1 ends (block 740) if there are no other elements.

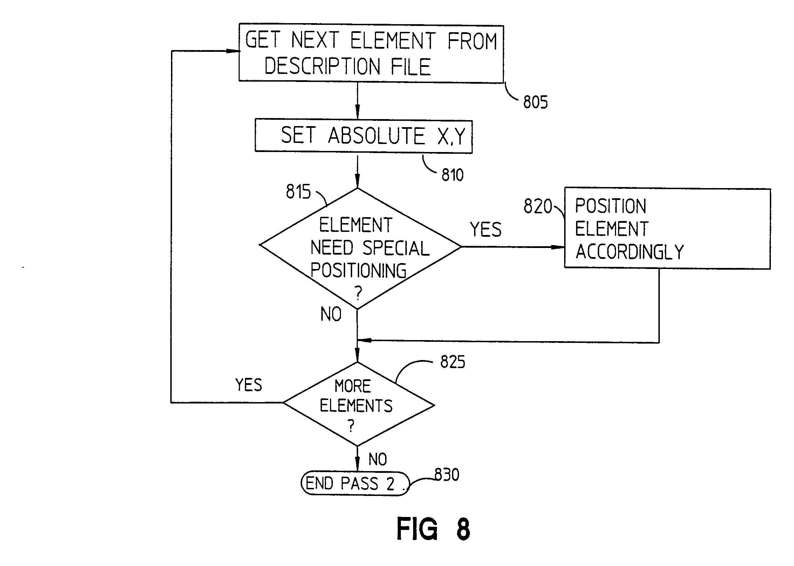

FIG. 8 shows a more detailed flow diagram of the method of the second pass. Block 805 starts by retrieving the next available element from a description file. If the second pass has just begun, the next available element will be the first-defined element residing in the description file. Block 810 then sets the absolute x-axis and y-axis position of the element relative to the upper left hand corner of the dialog box. Decisional block 815 determines if there is any special positioning requirements associated with the element. In a preferred embodiment, special positioning includes stretch styles (see, Appendix A). If the element needs special positioning, block 820 will position the element according to the element's settings as defined in the dialog box template. If no special positioning requirements are present, that element has been absolutely placed within the dialog box.

Block 825 determines whether there is any more elements in the description file. If there is, control is returned to block 805 to retrieve the next element; otherwise, pass to is completed 830.

While the present invention has been illustrated and described in connection with the preferred embodiment, it is not to be limited to the particular structure shown. It should be understood by those skilled in the art that various changes and modifications may be made within the purview of the appended claims without departing from the spirit and scope of the invention in its broader aspects.

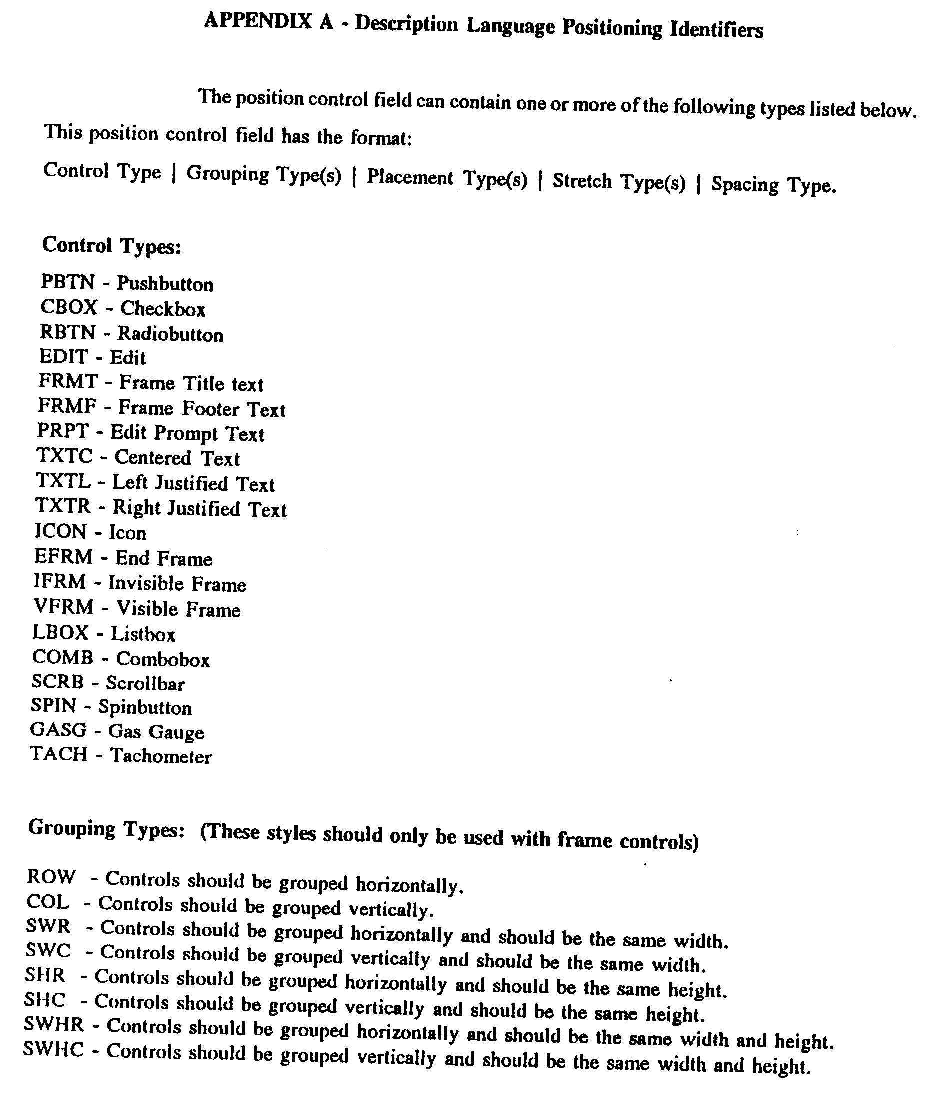

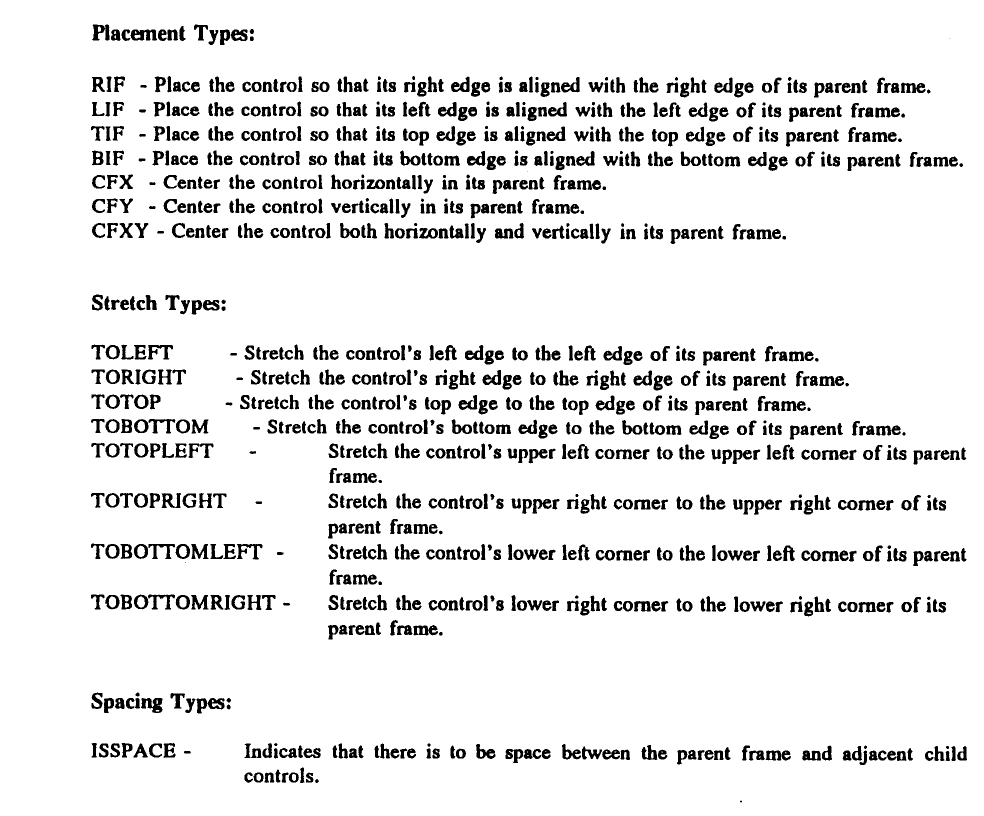

## Claims

1. A method of dynamically building a dialog box (240) in a graphical user interface (225) that includes a display screen, and a description file containing at least one element, the method comprising the computer-implemented steps of:
(1) retrieving (505) the at least one element from the description file;
(2) setting initial positioning (420) for the at least one element within the dialog box;
(3) determining whether special positioning is required (450) for the at least one element;
(4) setting special positioning (820) for the at least one element within the dialog box if step (3) determines special positioning is required; and
(5) displaying the dialog box (480) to the display screen.

2. The method of claim 1, wherein step (2) further comprises the step of setting relative x-axis and y-axis positions (510) with respect to an origin of the dialog box.

3. The method of claim 2, wherein the origin is an upper left-hand corner of the dialog box.

4. The method of claim 1, wherein step (2) further comprises the steps of: determining (515) whether the at least one element is a frame element; and retrieving a second element (505) from the description file if the at least one element is a frame element.

5. A description language controller (332) for building a description file, the description file containing a plurality of templates for building a plurality of dialog boxes, the description language controller comprising:
an initial placement process (335) connected to the controller;
an uniform control dimensions process (336) connected to the controller;
a special placement process (337) connected to the controller; and
a stretch controller process (338) connected to the controller,
wherein the description language controller passes control to the processes and receives information from the processes as the description file is being built.
